# EUROPEAN PATENT SPECIFICATION

(11) **EP 4 570 876 B1**
(45) Date of publication and mention of the grant of the patent: **14.01.2026**
(21) Application number: 24782159.8
(22) Date of filing: 18.06.2024
(51) Int. Cl.: C09K 3/14, C01F 7/442, C01B 33/18, C01F 7/02, C04B 35/117, B24D 5/02, C04B 35/634

(54) **POLYCRYSTALLINE ALUMINA ABRASIVE GRAINS, METHOD FOR PRODUCING SAME, AND GRINDSTONE**
POLYKRISTALLINE ALUMINIUMOXIDSCHLEIFKÖRNER, VERFAHREN ZU IHRER HERSTELLUNG UND SCHLEIFSTEIN
GRAINS ABRASIFS D'ALUMINE POLYCRISTALLINE, LEUR PROCÉDÉ DE PRODUCTION ET MEULE

(30) Priority: 13.10.2023 JP 2023177781
(43) Date of publication of application: 18.06.2025
(73) Proprietor: Resonac Corporation, Tokyo 105-7325 (JP)
(72) Inventor: TANAKA, Seiji, Tokyo 1057325 (JP); YAMADA, Jiro, Tokyo 1057325 (JP)
(74) Representative: Strehl & Partner mbB
(86) International application number: PCT/JP2024/021967
(87) International publication number: WO 2025/079294

(56) References cited:
- CA-A1- 2 177 702
- JP-A- H04 260 612
- JP-A- H05 345 611

## Description

### Technical Field

The present invention relates to polycrystalline alumina abrasive grains suitable for polishing and grinding difficult-to-machine materials such as chromium molybdenum steel, a method for producing the same, and a grindstone.

### Background Art

Polycrystalline alumina abrasive grains are used as materials for grindstones of polishing and grinding tools. The polycrystalline alumina abrasive grains are known to exhibit superior polishing and grinding performance, the smaller the grain size of the alumina, and also the fewer the pores, the denser, and the closer to the theoretical specific gravity.

The commonly used method for producing the polycrystalline alumina abrasive grains is a sol-gel process in which pseudo-boehmite is fired after undergoing solation and gelation.

To obtain the polycrystalline alumina abrasive grains having superior polishing and grinding performance as described above, known is a method in which, for example, rare earth elements are added to pseudo-boehmite sol or dried gel and fired to inhibit the growth of alumina crystals by producing needle-like crystals of rare earth complex oxides (e.g., Patent Literature 1).

Also proposed are the addition of silica and zirconia to pseudo-boehmite sol or dried gel to inhibit the growth of alumina crystal (e.g., Patent Literature 2), and the use of iron and silica as additives to alumina precursors (e.g., Patent Literature 3). CA2177702 A1 describes abrasive polycrystalline α-alumina grains with an alumina content ≥ 95 wt% and particle sizes ≥ 1 µm and Mohs hardness of about 8.

### Citation List

### Patent Literature

PTL1: JP 06-92575 A
PTL2: JP 2003-510417 A
PTL3: JP 2756258 B

### Summary of Invention

### Technical Problem

However, there have been problems that the production method as described in Patent Literature 1 can only inhibit the grain size of alumina to approximately 0.5 µm and also the use of expensive rare earth elements results in a high production cost.

On the other hand, in the methods such as those described in Patent Literatures 2 and 3, the alumina purity of the abrasive grains is low, the content of metal components such as zirconium and iron is high, and there have been concerns about the effects of the metal components on the workpieces being polished or ground, and the polishing and grinding performance of the abrasive grains cannot always be uniformly controlled. In addition, there have been problems that zirconia is relatively expensive, and when the zirconia is used, the production cost is high.

The present invention was made in view of these problems, and was intended to provide polycrystalline alumina abrasive grains having a small grain size of alumina and superior polishing and grinding performance, a method for producing the polycrystalline alumina abrasive grains at a low cost, and a grindstone using the polycrystalline alumina abrasive grains.

### Solution to Problem

The present invention is based on the finding that in the production of polycrystalline alumina abrasive grains by a sol-gel process, the growth of alumina crystals can be inhibited by addition of a predetermined amount of silica, and polycrystalline alumina abrasive grains having superior polishing and grinding performance can be obtained at a low production cost.

The present invention provides the followings.
[1] Polycrystalline alumina abrasive grains, wherein an alumina content is 95.0% by mass or more, a silica content is 0.05 to 3.30% by mass, a grain size is 0.100 to 0.400 µm, and a Vickers hardness is 21.00 or more.

Preferably, the apparent specific gravity is 3.800 g/cm³ or more.

Preferably, the alumina content is 99.0% by mass or more, the silica content is 0.10 to 0.40% by mass, the grain size is 0.100 to 0.180 µm, the apparent specific gravity is 3.900 to 3.960 g/cm³, and the Vickers hardness is 23.10 to 24.00.

The invention also provides a method for producing the polycrystalline alumina abrasive grains the method including: a step of obtaining a liquid mixture of pseudo-boehmite, silica having an average particle diameter of 100 nm or less at 0.01 parts by mass or more and less than 3.0 parts by mass with respect to 100 parts by mass of a solid content of the pseudo-boehmite, and water of 400 to 630 parts by mass with respect to 100 parts by mass of the solid content of the pseudo-boehmite; a step of adding a deflocculant to the liquid mixture to obtain a sol; a step of adding alumina seeds having a median diameter (D50) of 700 nm or less at 0.01 to 5.0 parts by mass with respect to 100 parts by mass of the solid content of the pseudo-boehmite to the sol, to obtain a seed-containing sol; a step of drying the seed-containing sol to a moisture content of 15% by mass or less, crushing a residue, and then performing calcination at 550°C or more and less than 1,200°C; and a step of performing firing at 1,200 to 1,500°C.

Preferably, in the step of obtaining the liquid mixture, an amount of the silica blended is 0.08 to 0.35 parts by mass with respect to 100 parts by mass of the solid content of the pseudo-boehmite.

Preferably, the step of performing the calcination includes a first calcination substep at 550°C or more and less than 1,000°C and a second calcination substep at 800°C or more and less than 1,200°C which is at a higher temperature than that of the first calcination substep.

Preferably, the calcination and the firing are performed in a rotary kiln. The invention also provides a grindstone including the polycrystalline alumina abrasive grains.

### Advantageous Effects of Invention

According to the present invention, polycrystalline alumina abrasive grains having a small grain size of alumina and superior polishing and grinding performance and a grindstone using these grains are provided.

In addition, according to the production method of the present invention, the polycrystalline alumina abrasive grains can be produced at a low cost.

### Description of Embodiment

Definitions and significance of terms and notations in the present specification are shown in the followings.

A preferable numerical range can be any combination of any of preferable lower and upper limits.

A grain size is a value measured by checking grain boundaries in an observed image of abrasive grains with a scanning electron microscope (SEM). Specifically, it is obtained by the method described in Examples.

An apparent specific gravity is a value measured by a gas displacement pycnometer. Specifically, it is obtained by the method described in Examples.

A median diameter (D50) is a particle diameter at 50% cumulative volume, as measured by a laser diffraction scattering method.

### [Polycrystalline Alumina Abrasive Grains]

Polycrystalline alumina abrasive grains with respect to the embodiment of the present invention (hereinafter also referred to as "the present embodiment") have an alumina content of 95.0% by mass or more and a silica content of 0.05 to 3.30% by mass, and a grain size of 0.100 to 0.400 µm and a Vickers hardness of 21.00 or more.

The polycrystalline alumina abrasive grains of the present embodiment (hereinafter also simply referred to as "abrasive grains") contain a predetermined amount of silica and have a small grain size of alumina, and have superior polishing and grinding performance. In particular, the abrasive grains of the present embodiment can be suitably applied to polishing and grinding difficult-to-machine materials, and are suitable as materials for grindstones.

The abrasive grains of the present embodiment are mainly composed of alumina, and the alumina content is 95.0% by mass or more, preferably 97.0% by mass or more, more preferably 98.0% by mass or more, and even more preferably 99.0% by mass or more.

An upper limit of the alumina content in the abrasive grains is not limited, but is 99.95% by mass or less, preferably 99.9% by mass or less, taking into account the silica content.

In order to achieve good polishing and grinding performance, the abrasive grains have the silica content of 0.05 to 3.30% by mass, preferably 0.06 to 3.00% by mass, more preferably 0.07 to 2.50% by mass, even more preferably 0.08 to 1.00% by mass, and particularly preferably 0.10 to 0.40% by mass.

When the silica content is 0.05% by mass or more, the grain size of the abrasive grains tends to be smaller. When the silica content is 3.00% by mass or less, abrasive grains of high hardness can be easily obtained.

Other than alumina and silica constituents, the abrasive grains may contain impurity metal elements as unavoidable components derived from raw materials or associated with mixing during production processes. Examples of the impurity metal elements include sodium, calcium, and iron.

A content of the components other than alumina and silica in the abrasive grains is preferably 0.20% by mass or less, more preferably 0.18% by mass or less, and even more preferably 0.16% by mass or less, from the viewpoints of good polishing and grinding performance of the abrasive grains, inhibition of coloration, etc.

In order for the abrasive grains to exhibit good polishing and grinding performance, the grain size is 0.400 µm or less, preferably 0.300 µm or less, more preferably 0.250 µm or less, even more preferably 0.200 µm or less, and particularly preferably 0.180 µm or less. A lower limit of the grain size is 0.100 µm or more for the abrasive grains of high hardness, preferably 0.110 µm or more, more preferably 0.120 µm or more, even more preferably 0.130 µm or more, and still more preferably 0.140 µm or more.

From the viewpoint of good polishing and grinding performance, the abrasive grains preferably have the apparent specific gravity of 3.800 g/cm³ or more, more preferably 3.810 g/cm³ or more, and even more preferably 3.900 g/cm³ or more. The larger the apparent specific gravity, the more desirable it is, but in practice, an upper limit is preferably 3.960 g/cm³ or less.

From the viewpoint of good polishing and grinding performance, the abrasive grains preferably have high hardness, and the Vickers hardness is 21.00 or more, preferably 21.50 or more, more preferably 22.00 or more, even more preferably 23.00 or more, and still more preferably 23.10 or more. The higher the Vickers hardness, the more desirable it is, but in practice, an upper limit is preferably 24.00 or less.

Specifically, the Vickers hardness can be measured by the method described in Examples.

From the viewpoint of superior polishing and grinding performance, the abrasive grains of the present embodiment particularly preferably have the alumina content of 99.0% by mass or more, the silica content of 0.10 to 0.40% by mass, the grain size of 0.100 to 0.180 µm, the apparent specific gravity of 3.900 to 3.960 g/cm³, and the Vickers hardness of 23.10 to 24.00.

The polishing and grinding performance of abrasive grains can be evaluated by a grinding ratio and required grinding power, for example, when the abrasive grains are used to make a grindstone and the grindstone is used and the difficult-to-machine material such as chromium molybdenum steel is used as a work material. Specifically, the evaluation can be made using a method described in Examples.

### [Production Method]

The abrasive grains of the present embodiment can be suitably produced by a production method with respect to the embodiment of the present invention. The production method with respect to the present embodiment includes: a step of obtaining a liquid mixture of pseudo-boehmite, silica having an average particle diameter of 100 nm or less and 0.01 parts by mass or more and less than 3.0 parts by mass with respect to 100 parts by mass of a solid content of the pseudo-boehmite, and water of 400 to 630 parts by mass with respect to 100 parts by mass of the solid content of the pseudo-boehmite (Step 1); a step of adding a deflocculant to the liquid mixture to obtain a sol (Step 2); a step of adding alumina seeds having a D50 of 700 nm or less at 0.01 to 5.0 parts by mass with respect to 100 parts by mass of the solid content of the pseudo-boehmite to the sol, to obtain a seed-containing sol (Step 3); a step of drying the seed-containing sol to a moisture content of 15% by mass or less, crushing a solid content obtained, and then performing calcination at 550°C or more and less than 1,200°C (Step 4); and a step of performing firing at 1,200 to 1,500°C (Step 5).

According to the production method of the present embodiment, the polycrystalline alumina abrasive grains having a small grain size can be produced at a low cost without using expensive rare earth elements or zirconium as conventional.

Hereinafter, each step of the production method of the present embodiment will be described.

### (Step 1)

In Step 1, obtained is the liquid mixture of the pseudo-boehmite, the silica having an average particle diameter of 100 nm or less and 0.01 parts by mass or more and less than 3.0 parts by mass with respect to 100 parts by mass of the solid content of the pseudo-boehmite, and the water of 400 to 630 parts by mass with respect to 100 parts by mass of the solid content of the pseudo-boehmite.

Specifically, the pseudo-boehmite and the silica are added to water and stirred and mixed to obtain a uniform liquid mixture.

In the present embodiment, the pseudo-boehmite is used as the main raw material. The pseudo-boehmite is alumina hydrate, and commercial products generally contain 10 to 20% by mass of water. For the pseudo-boehmite, the dried weight loss when thoroughly dried at 100°C is considered as the moisture content, and the dried residual content is considered as the solid content.

For the silica, fine particles with an average particle diameter of 100 nm or less are used. The fine silica particles segregate to crystal grain boundaries of the alumina in the subsequent firing step and inhibit crystal growth of the alumina, resulting in polycrystalline alumina abrasive grains having a small grain size.

A maximum particle diameter of the silica is preferably 1 µm or less, more preferably 500 nm or less, and even more preferably 200 nm or less, from the viewpoints of ease of handling, cost, etc. An average particle diameter of the silica is preferably 1 to 50 nm, more preferably 2 to 30 nm, from the viewpoint of inhibiting the growth of alumina crystal grains during firing. Colloidal silica dispersed in water is suitably used as such fine-particle silica from the viewpoint of easy availability or the like.

The average particle diameter of the silica in the present specification is the Sears particle diameter when it is 5 nm or less, and the value calculated from a specific surface area measured by the BET method (single-point method, nitrogen gas adsorption) when it is more than 5 nm. The Sears particle diameter is an equivalent diameter calculated by determining a specific surface area of the silica based on the titration volume of an aqueous sodium hydroxide solution at a concentration of 0.1 mol/L required to bring the silica equivalent to 1.5 g of SiO₂ (colloidal silica) from pH 4 to pH 9, and assuming that the particles are spherical (Reference: G. W. Sears, Jr., "Analytical Chemistry", vol. 28, No. 12, pp.1981-1983 (1956)). The average particle diameter [nm] calculated from the BET method is obtained from the relational expression: 6000/{(density [g/cm³])×(specific surface area [m²/g])} (density of silica: 2.2 g/cm³).

The pseudo-boehmite may contain silica, an impurity derived from raw materials, and other element-containing components as unavoidable components. Therefore, in order to obtain the abrasive grains of the present embodiment in which the silica content is 0.05 to 3.30% by mass, an amount of the silica blended in obtaining the liquid mixture is set at 0.01 parts by mass or more and less than 3.0 parts by mass, preferably 0.02 to 2.5 parts by mass, more preferably 0.03 to 2.0 parts by mass, even more preferably 0.05 to 0.4 parts by mass, and particularly preferably 0.08 to 0.35 parts by mass with respect to 100 parts by mass of the solid content of the pseudo-boehmite.

When the amount of the silica blended is 0.01 parts by mass or more, the grain size of the abrasive grains tends to be smaller, and when it is less than 3.0 parts by mass, the apparent specific gravity is large and the abrasive grains with high hardness are easily obtained.

The amount of water (including moisture contents of the pseudo-boehmite and the silica (colloidal silica)) in the liquid mixture is 400 to 630 parts by mass, preferably 430 to 570 parts by mass, and more preferably 450 to 490 parts by mass with respect to 100 parts by mass of the solid content of the pseudo-boehmite, from the viewpoints of ease of preparation of the liquid mixture with uniform dispersion of the pseudo-boehmite and the silica, work efficiency, etc.

### (Step 2)

Then, in Step 2, the deflocculant is added to the liquid mixture to obtain the sol.

The addition of the deflocculant colloidalizes the particles in the liquid mixture to form stably dispersed sol.

As the deflocculants, monobasic acids are preferable, and examples include acetic acid, hydrochloric acid, formic acid, and nitric acid. One or more deflocculants may be used alone or in combination. Of these, the nitric acid is preferable.

An amount of the deflocculant used is appropriately adjusted according to a type of the deflocculant, a particle content and a particle diameter in the liquid mixture, etc. For example, when the nitric acid is used as the deflocculant, an amount of the nitric acid used is preferably 0.1 to 20 parts by mass, more preferably 0.5 to 15 parts by mass, and even more preferably 1 to 10 parts by mass with respect to 100 parts by mass of the solid content of the pseudo-boehmite. The deflocculant may be diluted with water or the like as appropriate from the viewpoints of uniform mixing, handling, etc.

### (Step 3)

Then, in Step 3, the alumina seeds having the D50 of 700 nm or less at 0.01 to 5.0 parts by mass with respect to 100 parts by mass of the solid content of the pseudo-boehmite are added to the sol to prepare the seed-containing sol. The alumina seeds are added to the sol from the viewpoint of promoting the formation of alumina crystals in the subsequent firing step. It is preferable that the seed-containing sol be uniformly mixed and stirred.

In order to obtain polycrystalline alumina abrasive grains having a small grain size, used is the alumina seeds having the D50 of 700 nm or less, preferably 400 nm or less, and more preferably 200 nm or less. A lower limit of the D50 of the alumina seeds is not limited, but in practice, preferably 80 nm or more, more preferably 100 nm or more, and even more preferably 120 nm or more, from the viewpoint of ease of handling or the like.

The alumina seeds may be added as a dispersion liquid dispersed in a liquid medium such as water from the viewpoint of uniform dispersion in the sol.

The seed-containing sol can be used in the next step after purification, for example, by filtering or other measures, from the viewpoint of removing lumps due to insufficient deflocculation, introduced foreign matter, etc.

### (Step 4)

Next, in Step 4, the seed-containing sol is dried to the moisture content of 15% by mass or less, the residual content is crushed, and then the calcination is performed at 550°C or more and less than 1,200°C.

From the viewpoint of uniform firing in the subsequent firing step, the drying and the calcination are performed.

Drying of the seed-containing sol is performed until the moisture content of the dried residual content (dried product) is 15% by mass or less. The weight loss during the drying is considered to be the moisture content of the dried product. The drying may be performed, for example, by heating at 100 to 140°C.

The calcination is performed after crushing the dried product from the viewpoint of obtaining homogeneous abrasive grains. Although the crushing depends on the desired grain size of the abrasive grains, for example, to obtain particles corresponding to F60 grain size as specified in JIS R6001-1: 2017, the crushing is performed so that the particle diameter is preferably approximately 1 mm or less, more preferably 900 µm or less, and even more preferably 700 µm or less.

A method for crushing is not limited and may be performed by known methods, of which examples include a roll breaker, a hammer crusher, a jaw crusher, and a ball mill.

The particles obtained by crushing may be sieved in part and calcined, taking into account the particle shrinkage in the firing step, depending on the desired grain size of the abrasive grains.

The calcination is performed at a temperature within the range of 550°C or more and less than 1,200°C, preferably 600 to 1,150°C, and more preferably 650 to 1,100°C. Although the calcination can be performed in various types of heat treatment furnaces, it is preferably performed in a rotary kiln from the viewpoint of uniform heating of the particles.

In the calcination, the particles are sufficiently dehydrated and impurities derived from the deflocculant or the like are sufficiently removed.

It is preferable that the calcination includes a first calcination substep at 550°C or more and less than 1,000°C and a second calcination substep at 800°C or more and less than 1,200°C and at a higher temperature than that of the first calcination substep.

By going through a plurality of calcination substeps which have each temperature increased stepwise, abrasive grains having a smaller grain size, a larger apparent specific gravity, and a higher hardness can be obtained.

A plurality of calcination substeps may be two substeps (two-step temperature setting) from the viewpoint of abrasive grain production efficiency, but may be three or more substeps with three-or-more-step temperature setting.

The temperature of the first calcination is preferably 550°C or more and less than 1,000°C, more preferably 600 to 900°C, and even more preferably 650 to 800°C. The time of the first calcination is, for example, 1 to 30 minutes.

The temperature of the second calcination must be a higher temperature than that of the first calcination substep, preferably 800°C or more and less than 1,200°C, more preferably 900 to 1,150°C, and even more preferably 950 to 1,100°C. The time of the second calcination is, for example, 1 to 30 minutes.

### (Step 5)

Then, in Step 5, the firing is performed at 1,200 to 1,500°C.

High temperature firing (main firing) causes sintering of alumina polycrystals having a small grain size to proceed, starting from the alumina seeds.

The firing is performed at a temperature in the range of 1,200 to 1,500°C, preferably 1,250 to 1,450°C, and more preferably 1,300 to 1,400°C. The firing can be performed in various types of heat treatment furnaces, but from the viewpoint of uniform heating of the particles, it is preferably performed in a rotary kiln. The time of the firing is, for example, 1 to 30 minutes.

The resulting fired powder may be stood to cool and, if necessary, sieved to obtain abrasive grains of the desired grain size.

The grindstone of the present embodiment includes the polycrystalline alumina abrasive grains of the present embodiment described above. The abrasive grains of the present embodiment can be applied to polishing and grinding material products in a known manner, and are particularly suitable as a material for grindstones for polishing and grinding tools. Examples of polishing and grinding material products include vitrified grindstones, resinoid grindstones, and abrasive cloth papers.

The abrasive grains of the present embodiment can also be used in, for example, molded grindstones that are formed into various shapes, such as star-shaped, arrowhead-shaped, polygonal, rod-shaped, and cross-shaped, by extrusion or press molding using a binder and the like.

### Examples

Hereinafter, the embodiments of the present invention will be described on the basis of Examples, but the present invention is not limited to the following Examples.

### [Preparation of Abrasive Grains]

The details of raw materials used in Examples and Comparative Examples are as follows.
- Pseudo-boehmite: Moisture content of 20% by mass
- Colloidal silica: "SNOWTEX (R) ST-NXS", produced by Nissan Chemical Corporation, water dispersion, average particle diameter of 5nm, solid content of 15% by mass
- Deflocculant: Dilute nitric acid (concentration of 17.8% by mass)
- Alumina seeds: Alumina purity of 99% by mass or more, D50 of 150 nm

In addition, the alumina seeds used was a ball-milled product and the D50 was measured using a laser diffraction scattering particle size distribution analyzer ("MT3300EXII", produced by MicrotracBEL Corporation).

### (Example 1)

7,326.15 g of pure water, 17.0 g of colloidal silica (0.15 parts by mass of a solid content with respect to 100 parts by mass of the solid content of the pseudo-boehmite) and 2,125 g of the pseudo-boehmite were stirred and mixed for 30 minutes. To this, 425 g of dilute nitric acid was added as the deflocculant for 1 minute, and stirred for 4 hours or more to obtain a sol.

To the resulting sol, 85.0 g of a water dispersion of the alumina seeds with a concentration of 20% by mass (1 part by mass of the alumina seeds with respect to 100 parts by mass of the solid content of the pseudo-boehmite) was added, and after stirring for 30 minutes, the contents were emptied into a vat (thickness of 20 to 30 mm).

The vat was placed in a dryer at a set temperature of 100°C, and the contents were dried for 15 hours until the moisture content was 15% by mass or less.

The resulting dried product was crushed with a roll breaker to a particle diameter of approximately 700 µm or less, and then sieved with a vibrating sieve to obtain a sieved powder with a particle diameter of more than 375 µm and 475 µm or less.

The sieved powder was calcined in a rotary kiln at 700°C for 10 minutes (the first calcination) and further at 1,050°C for 8 minutes (the second calcination).

The resulting calcined powder was then fired in the rotary kiln at 1,360°C for 8 minutes.

The resulting fired powder was stood to cool and then sieved through the vibrating sieve to obtain abrasive grains having a particle diameter of more than 180 µm and 450 µm or less (F60 grain size).

### (Examples 2 to 8 and Comparative Examples 1 to 3)

Each amount of the silica blended shown in Table 1 was added, and each example of the abrasive grains was prepared in the same manner as in Example 1 except for the amount of the silica blended. In Example 8, only the first calcination was performed and the calcination at 1,050°C (the second calcination) was not performed.

### [Measurement and Evaluation of Abrasive Grains]

The measurement and the evaluation of each of the following items was performed on abrasive grains obtained in each of Examples and Comparative Examples. The evaluation and measurement results are shown in Table 1.

The alumina in each of the abrasive grains has been confirmed to be α alumina by X-ray diffraction analysis.

### (Grain Size)

Approximately 0.15 g of abrasive grains were rinsed and placed in an alumina boat to which 0.7 g of an aqueous sodium tetraborate solution at a concentration of 5% by mass was dropped and, after drying at 100°C, the abrasive grains were heated at a temperature rise rate of 100°C/hr and heat treated at 950°C for 30 minutes. The abrasive grains were stood to cool, and again heated to 100°C and hydrochloric acid at a concentration of 17.5% by mass was dropped to the extent that the abrasive grains were soaked, and stirred. After the abrasive grains were fully dispersed, they were rinsed and dried at 100°C. The resulting powder was used as the sample.

The sample was observed using a scanning electron microscope (SEM) ("JSM-6510LV", produced by JEOL Ltd.; 20,000 times magnification). The numbers of grain boundaries on the four lines, vertical, horizontal, and diagonals, passing through the center of an observed image (rectangle) were counted, and the length of each line divided by the number of grain boundaries on the line was adopted as the grain size. The average value of 10 observed images was used as the grain size.

### (Component Analysis)

The content in terms of oxides of various metal components were determined for the abrasive grains using an X-ray fluorescence analyzer ("ZSX (R) Primus II", produced by Rigaku Corporation; fundamental parameter method).

### (Apparent Specific Gravity)

The apparent specific gravity was measured for the abrasive grains using a pycnometer (gas displacement pycnometer "AccuPyc II 1340", produced by Micromeritics Instrument Corporation; helium gas displacement).

### (Vickers Hardness)

The Vickers hardness was measured in accordance with JIS Z 2244:2009 as follows.

0.1 g of abrasive grains were placed in a sample cup (circular base surface of 25 mm in diameter), and two-component type epoxy resin was poured to cure it to obtain a cured material with embedded abrasive grains.

The bottom surface of the cured material removed from the sample cup was polished with sandpaper to prepare surfaces of the abrasive grains, and then mirror-polished to a depth of 1 µm with diamond abrasives to prepare the sample to be measured.

The Vickers hardness of the sample was measured using Micro-Vickers Hardness Tester ("HMV-G21", produced by Shimadzu Corporation). The Vickers hardness values shown in Table 1 are the arithmetic mean values of the measured values of 15 abrasive grains, measured once for each abrasive grain.

**Table 1**

| | | Silica Amount Blended* [parts by mass] | Calcination | Abrasive Grains | | | | |
|---|---|---|---|---|---|---|---|---|
| | | | | Content [% by mass] | | Grain Size [µm] | Apparent Specific Gravity [g/cm³] | Vickers Hardness (Hv) |
| | | | | Alumina | Silica | | | |
| | 1 | 0.15 | Twice | 99.7 | 0.20 | 0.173 | 3.949 | 23.67 |
| | 2 | 0.05 | Twice | 99.8 | 0.08 | 0.228 | 3.959 | 22.80 |
| | 3 | 0.1 | Twice | 99.7 | 0.14 | 0.145 | 3.956 | 23.36 |
| Examples | 4 | 0.3 | Twice | 99.5 | 0.38 | 0.145 | 3.916 | 23.85 |
| | 5 | 0.4 | Twice | 99.4 | 0.47 | 0.136 | 3.870 | 22.81 |
| | 6 | 0.5 | Twice | 99.3 | 0.61 | 0.132 | 3.826 | 23.09 |
| | 7 | 1.9 | Twice | 97.7 | 2.20 | 0.128 | 3.905 | 22.50 |
| | 8 | 0.15 | Only once | 99.7 | 0.21 | 0.193 | 3.873 | 22.92 |
| Comparative Examples | 1 | 0 | Twice | 99.9 | 0.04 | 0.421 | 3.866 | 21.42 |
| | 2 | 3.0 | Twice | 96.5 | 3.40 | 0.126 | 3.876 | 11.44 |
| | 3 | 4.0 | Twice | 95.4 | 4.49 | 0.111 | 3.845 | 10.60 |

| | | | | | | | | |
|---|---|---|---|---|---|---|---|---|
| (Note) *Amount blended with respect to 100 parts by mass of the solid content of the pseudo-boehmite | | | | | | | | |

As can be seen from the results shown in Table 1, it has been recognized that polycrystalline alumina abrasive grains containing a predetermined amount of silica have a smaller grain size, a larger apparent specific gravity, and a higher Vickers hardness.

In addition, from the comparison between Example 1 and Example 8, it can be seen that abrasive grains with a larger apparent specific gravity and a higher Vickers hardness can be obtained by undergoing two stages of calcination.

### [Grinding Performance Evaluation]

Vitrified grindstones were prepared by using each type of abrasive grains obtained in Examples 1 to 4 and Comparative Example 1, and the grinding performance of the abrasive grains was evaluated.

The vitrified grindstones (segment grindstones) were prepared by mixing 46% by volume of abrasive grains, 5% by volume of frit bond, and 49% by volume of binder (phenolic resin: "BRP-5417", produced by Aica Kogyo Company, Limited), and firing at 1,050°C.

The grinding conditions in the grinding performance evaluation are shown as follows.

### (Grinding Conditions)

- Work material: SCM435 (chromium molybdenum steel; Rockwell hardness (HRC) 42)
- Working surface: Length 200 mm, width 100 mm
- Grinding machine: Precision Surface Grinding Machine "PSG-63AN", produced by Okamoto Machine Tool Works, Ltd.; Wheel spindle motor 3.7 kW
- Grinding system: Wet surface traverse grinding
- Grinding wheel peripheral speed: 1,800 mm/min
- Table speed: 15 m/min
- Cross feed: 4 mm/pass
- Depth of cut: 10 µm (total depth of cut: 1 mm)

### (Evaluation Item)

### <Grinding Ratio>

A ratio of the volume reduction of the work material before and after grinding (200 mm×100 mm×1 mm=20,000 mm³) to the wear amount of the grindstone [mm³] was calculated and used as the grinding ratio. The wear amount of the grindstone was obtained by calculating the wear volume from the reduction in the wheel diameter before and after grinding.

The grinding ratios in Table 2 are expressed as relative values with Comparative Example 1 (Reference Value 1) as the reference.

### <Grinding Power>

The average electrical power during grinding was obtained and determined as the grinding power.

The grinding power in Table 2 is expressed as a relative value with Comparative Example 1 (Reference Value 1) as the reference. It is shown that the smaller the grinding power is, the smaller the grinding resistance is.

**Table 2**

| | Grinding Ratio (Relative Ratio) | Grinding Power (Relative Ratio) |
|---|---|---|
| Example 1 | 2.61 | 0.67 |
| Example 2 | 1.98 | 0.82 |
| Example 3 | 2.61 | 0.75 |
| Example 4 | 1.91 | 0.79 |
| Comparative Example 1 | 1 | 1 |

In addition, as can be seen from the results shown in Table 2, it has been recognized that the abrasive grains of the present embodiment have a higher grinding ratio, lower grinding power, and superior grinding performance, compared with the alumina abrasive grains produced without the addition of silica (Comparative Example 1).

## Claims

1. Polycrystalline alumina abrasive grains, wherein an alumina content is 95.0% by mass or more, a silica content is 0.05 to 3.30% by mass, a grain size is 0.100 to 0.400 µm, and a Vickers hardness is 21.00 or more.

2. The polycrystalline alumina abrasive grains according to claim 1, wherein an apparent specific gravity is 3.800 g/cm³ or more.

3. The polycrystalline alumina abrasive grains according to claim 1, wherein the alumina content is 99.0% by mass or more, the silica content is 0.10 to 0.40% by mass, the grain size is 0.100 to 0.180 µm, the apparent specific gravity is 3.900 to 3.960 g/cm³, and the Vickers hardness is 23.10 to 24.00.

4. A method for producing the polycrystalline alumina abrasive grains according to any one of claims 1 to 3, the method comprising:
a step of obtaining a liquid mixture of pseudo-boehmite, silica having an average particle diameter of 100 nm or less at 0.01 parts by mass or more and less than 3.0 parts by mass with respect to 100 parts by mass of a solid content of the pseudo-boehmite, and water of 400 to 630 parts by mass with respect to 100 parts by mass of the solid content of the pseudo-boehmite;
a step of adding a deflocculant to the liquid mixture to obtain a sol;
a step of adding alumina seeds having a median diameter (D50) of 700 nm or less at 0.01 to 5.0 parts by mass with respect to 100 parts by mass of the solid content of the pseudo-boehmite to the sol, to obtain a seed-containing sol;
a step of drying the seed-containing sol to a moisture content of 15% by mass or less, crushing a residue, and then performing calcination at 550°C or more and less than 1,200°C; and
a step of performing firing at 1,200 to 1,500°C.

5. The method for producing the polycrystalline alumina abrasive grains according to claim 4, wherein in the step of obtaining the liquid mixture, an amount of the silica blended is 0.08 to 0.35 parts by mass with respect to 100 parts by mass of the solid content of the pseudo-boehmite.

6. The method for producing the polycrystalline alumina abrasive grains according to claim 4, wherein the step of performing the calcination comprises a first calcination substep at 550°C or more and less than 1,000°C and a second calcination substep at 800°C or more and less than 1,200°C which is at a higher temperature than that of the first calcination substep.

7. The method for producing the polycrystalline alumina abrasive grains according to claim 4, wherein the calcination and the firing are performed in a rotary kiln.

8. A grindstone comprising the polycrystalline alumina abrasive grains according to any one of claims 1 to 3.

## Patentansprüche

1. Polykristalline Aluminiumoxid-Schleifkörner, wobei der Aluminiumoxidgehalt 95,0 Massenprozent oder mehr beträgt, der Siliziumdioxidgehalt 0,05 bis 3,30 Massenprozent beträgt, die Korngröße 0,100 bis 0,400 µm beträgt und die Vickers-Härte 21,00 oder mehr beträgt.

2. Polykristalline Aluminiumoxid-Schleifkörner gemäß Anspruch 1, wobei die scheinbare Dichte 3,800 g/cm³ oder mehr beträgt.

3. Polykristallinen Aluminiumoxid-Schleifkörner gemäß Anspruch 1, wobei der Aluminiumoxidgehalt 99,0 Massenprozent oder mehr beträgt, der Siliciumdioxidgehalt 0,10 bis 0,40 Massenprozent beträgt, die Korngröße 0,100 bis 0,180 µm beträgt, das scheinbare spezifische Gewicht 3,900 bis 3,960 g/cm³ beträgt und die Vickers-Härte 23,10 bis 24,00 beträgt.

4. Verfahren zur Herstellung der polykristallinen Aluminiumoxid-Schleifkörner gemäß einem der Ansprüche 1 bis 3, wobei das Verfahren umfasst:
einen Schritt zum Erhalten einer flüssigen Mischung aus Pseudoböhmit, Siliciumdioxid mit einem durchschnittlichen Teilchendurchmesser von 100 nm oder weniger in einer Menge von 0,01 Massenanteilen oder mehr und weniger als 3,0 Massenanteilen in Bezug auf 100 Massenanteile des Feststoffgehalts des Pseudoböhmits, und Wasser in einer Menge von 400 bis 630 Massenanteilen, bezogen auf 100 Massenanteile des Feststoffgehalts des Pseudoböhmits;
einen Schritt des Hinzufügens eines Entflockungsmittels zu der flüssigen Mischung, um ein Sol zu erhalten;
einen Schritt des Hinzufügens von Aluminiumoxid-Keimen mit einem mittleren Durchmesser (D50) von 700 nm oder weniger in einer Menge von 0,01 bis 5,0 Masseteilen in Bezug auf 100 Masseteile des Feststoffgehalts des Pseudoböhmits zu dem Sol, um ein keimhaltiges Sol zu erhalten;
einen Schritt des Trocknens des keimhaltigen Sols auf einen Feuchtigkeitsgehalt von 15 Massenprozent oder weniger, des Zerkleinerns eines Rückstands und des anschließenden Durchführens einer Kalzinierung bei 550 °C oder mehr und weniger als 1200 °C; und
einen Schritt des Durchführens eines Brennens bei 1200 bis 1500 °C.

5. Verfahren zur Herstellung der polykristallinen Aluminiumoxid-Schleifkörner gemäß Anspruch 4, wobei in dem Schritt des Erhaltens der flüssigen Mischung eine Menge des beigemischten Siliciumdioxids 0,08 bis 0,35 Masseteile in Bezug auf 100 Masseteile des Feststoffgehalts des Pseudoböhmits beträgt.

6. Verfahren zur Herstellung der polykristallinen Aluminiumoxid-Schleifkörner gemäß Anspruch 4, wobei der Schritt des Durchführens der Kalzinierung einen ersten Kalzinierungs-Unterschritt bei 550 °C oder mehr und weniger als 1.000 °C und einen zweiten Kalzinierungs-Unterschritt bei 800 °C oder mehr und weniger als 1.200 °C, der bei einer höheren Temperatur als der erste Kalzinierungs-Unterschritt durchgeführt wird, umfasst.

7. Verfahren zur Herstellung der polykristallinen Aluminiumoxid-Schleifkörner gemäß Anspruch 4, wobei die Kalzinierung und das Brennen in einem Drehrohrofen durchgeführt werden.

8. Schleifstein, der die polykristallinen Aluminiumoxid-Schleifkörner gemäß einem der Ansprüche 1 bis 3 umfasst.

## Revendications

1. Grains abrasifs d'alumine polycristalline, dans lesquels une teneur en alumine est de 95,0 % en masse ou plus, une teneur en silice est de 0,05 à 3,30 % en masse, une taille de grain est de 0,100 à 0,400 µm, et une dureté Vickers est de 21,00 ou plus.

2. Grains abrasifs d'alumine polycristalline selon la revendication 1, dans lesquels une masse volumique apparente est de 3,800 g/cm³ ou plus.

3. Grains abrasifs d'alumine polycristalline selon la revendication 1, dans lesquels la teneur en alumine est de 99,0 % en masse ou plus, la teneur en silice est de 0,10 à 0,40 % en masse, la taille de grains est de 0,100 à 0,180 µm, la masse volumique apparente est de 3,900 à 3,960 g/cm³, et la dureté Vickers est de 23,10 à 24,00.

4. Procédé de production des grains abrasifs d'alumine polycristalline selon l'une quelconque des revendications 1 à 3, le procédé comprenant :
une étape consistant à obtenir un mélange liquide de pseudo-boehmite, de silice ayant un diamètre moyen de particules de 100 nm ou moins à raison de 0,01 partie en masse ou plus et de moins de 3,0 parties en masse par rapport à 100 parties en masse d'une teneur en matières solides de la pseudo-boehmite, et d'eau de 400 à 630 parties en masse par rapport à 100 parties en masse de la teneur en matières solides de la pseudo-boehmite ;
une étape consistant à ajouter un défloculant au mélange liquide afin d'obtenir un sol ;
une étape consistant à ajouter des germes d'alumine ayant un diamètre médian (D50) de 700 nm ou moins à raison de 0,01 à 5,0 parties en masse par rapport à 100 parties en masse de la teneur en matières solides de la pseudo-boehmite dans le sol, afin d'obtenir un sol contenant des germes ;
une étape consistant à sécher le sol contenant des germes jusqu'à une teneur en humidité de 15 % en masse ou moins, à broyer un résidu, puis à effectuer une calcination à 550 °C ou plus et moins de 1 200 °C ; et
une étape consistant à effectuer une cuisson à hauteur de 1 200 à 1 500 °C.

5. Procédé de production des grains abrasifs d'alumine polycristalline selon la revendication 4, dans lequel, dans l'étape consistant à obtenir le mélange liquide, une quantité de la silice mélangée est de 0,08 à 0,35 parties en masse par rapport à 100 parties en masse de la teneur en matières solides de la pseudo-boehmite.

6. Procédé de production des grains abrasifs d'alumine polycristalline selon la revendication 4, dans lequel l'étape consistant à effectuer la calcination comprend une première sous-étape de calcination à 550 °C ou plus et moins de 1 000 °C et une seconde sous-étape de calcination à 800 °C ou plus et moins de 1 200 °C qui se fait à une température plus élevée que celle de la première sous-étape de calcination.

7. Procédé de production des grains abrasifs d'alumine polycristalline selon la revendication 4, dans lequel la calcination et la cuisson sont effectuées dans un four rotatif.

8. Meule comprenant les grains abrasifs d'alumine polycristalline selon l'une quelconque des revendications 1 à 3.
